# EUROPÄISCHE PATENTSCHRIFT

(11) **EP 4 264 565 B1**
(45) Veröffentlichungstag und Bekanntmachung des Hinweises auf die Patenterteilung: **27.05.2026**
(21) Anmeldenummer: 21819344.9
(22) Anmeldetag: 26.11.2021
(51) Int. Cl.: G06V 10/82, G06V 20/58, G06V 10/772

(54) **KORREKTUR VON BILDERN EINER KAMERA BEI REGEN, LICHTEINFALL UND VERSCHMUTZUNG**
CORRECTION OF IMAGES FROM A CAMERA IN CASE OF RAIN, INCIDENT LIGHT AND CONTAMINATION
CORRECTION D'IMAGES À PARTIR D'UNE CAMÉRA EN CAS DE PLUIE, DE LUMIÈRE INCIDENTE ET DE CONTAMINATION

(30) Priorität: 15.12.2020 DE 102020215859
(43) Veröffentlichungstag der Anmeldung: 25.10.2023
(73) Patentinhaber: AUMOVIO Autonomous Mobility Germany GmbH, 85057 Ingolstadt (DE)
(72) Erfinder: SCHARFENBERGER, Christian, 90411 Nürnberg (DE); KARG, Michelle, 90411 Nürnberg (DE)
(74) Vertreter: Aumovio Corporation
(86) Internationale Anmeldenummer: PCT/DE2021/200207
(87) Internationale Veröffentlichungsnummer: WO 2022/128013

(56) Entgegenhaltungen:
- US-A1- 2020 090 322
- PORAV HORIA ET AL: "I Can See Clearly Now: Image Restoration via De-Raining", 2019 INTERNATIONAL CONFERENCE ON ROBOTICS AND AUTOMATION (ICRA), May 2019 (2019-05-01), pages 7087 - 7093, XP055896778, ISBN: 978-1-5386-6027-0, Retrieved from the Internet <URL:https://arxiv.org/pdf/1901.00893.pdf> DOI: 10.1109/ICRA.2019.8793486
- HORIA PORAV ET AL: "Rainy screens: Collecting rainy datasets, indoors", ARXIV.ORG, CORNELL UNIVERSITY LIBRARY, 201 OLIN LIBRARY CORNELL UNIVERSITY ITHACA, NY 14853, 10 March 2020 (2020-03-10), XP081618496
- MICHAL URICAR ET AL: "Let's Get Dirty: GAN Based Data Augmentation for Camera Lens Soiling Detection in Autonomous Driving", ARXIV.ORG, CORNELL UNIVERSITY LIBRARY, 201 OLIN LIBRARY CORNELL UNIVERSITY ITHACA, NY 14853, 9 November 2020 (2020-11-09), XP081808006
- HAMZEH YAZAN ET AL: "A Review of Detection and Removal of Raindrops in Automotive Vision Systems", J. IMAGING, 10 March 2021 (2021-03-10), pages 1 - 42, XP055844191, Retrieved from the Internet <URL:https://www.mdpi.com/2313-433X/7/3/52/htm> [retrieved on 20210923]
- CHEN RUILONG ET AL: "A Deep Learning Framework for Joint Image Restoration and Recognition", CIRCUITS, SYSTEMS AND SIGNAL PROCESSING, CAMBRIDGE, MS, US, vol. 39, no. 3, 5 August 2019 (2019-08-05), pages 1561 - 1580, XP037023091, ISSN: 0278-081X, [retrieved on 20190805], DOI: 10.1007/S00034-019-01222-X
- HANNA KAMYSHANSKA ET AL: "On autoencoder scoring", INTERNATIONAL CONFERENCE ON MACHINE LEARNING, 16 June 2013 (2013-06-16), XP055402361

## Beschreibung

Die Erfindung bezieht sich auf ein maschinelles Lernverfahren, ein Verfahren und eine Vorrichtung zur Korrektur von Bildern einer Kamera bei Regen, Lichteinfall oder Verschmutzung, beispielsweise einer fahrzeuggebundenen Umfelderfassungskamera.

Heutige und zukünftige Fahrzeuge sind mit kamerabasierten Assistenzsystemen ausgestattet, welche der Erkennung von Objekten zur Vermeidung von Kollisionen und der Erkennung von Straßenbegrenzungen zum Halten des Fahrzeuges in der Spur dienen. Dazu werden beispielsweise nach vorne schauende Kameras verwendet, die entweder alleine oder im Verbund mit Surroundview-Kameras eine Detektion- oder Darstellungsfunktion realisieren.

Es gibt Konzepte für nach vorne schauende Kameras, die eine Detektionsfunktion zur Detektion von Regen umfassen. Kombiniert mit einer kamerabasierten Taglichterkennung zur Steuerung der Fahrzeugscheinwerfer kann mit einer Kamera ein sogenannter Rain Light Detektor realisiert werden, der Regen auf der Windschutzscheibe erkennt und beispielsweise den Scheibenwischer aktiviert.

Die auf diesen Kamerasystemen basierenden Erkennungsalgorithmen kombinieren teilweise bereits Ansätze der klassischen Bildverarbeitung mit Ansätzen aus dem maschinellen Lernen, insbesondere dem Deep Learning. Klassische Ansätze zur Erkennung von Objekten oder Strukturen im Rahmen der Bildverarbeitung basieren auf manuell ausgewählten Features (Merkmalen), während auf Deep Learning basierende Ansätze relevante Features im Trainingsverfahren selbst bestimmen und optimieren.

Die oben genannten Kamerasysteme zeigen eine Degradation sowohl in der Erkennung von Objekten als auch bei der Darstellung der Umgebung oder von Objekten tritt jedoch ein, sobald in einer Situation die Sicht durch Regen, Lichteinfall oder Schmutz beeinträchtigt ist.

Ist die Sicht der beispielsweise im Spiegelfuß des Innenspiegels eingebauten Frontkamera durch Wassertropfen auf der Scheibe oder Schmutz eingeschränkt, kann die Sicht durch Betätigung des Scheibenwischers wiederhergestellt werden. Dies setzt eine Einbauposition der Kamera im Wischbereich des Scheibenwischers voraus.

Durch aufkommende Automatisierung des Fahrzeuges erhöht sich die Anzahl der nach vorne schauenden Kameras. Diese können nicht nur zentriert im Spiegelfuß angebracht sein, sondern nahe der A-Säule in den oberen Ecken einer Windschutzscheibe. Diese Bereiche sind für Detektionsfunktionalitäten eher kritisch, da sie sich außerhalb des Wischbereiches des Scheibenwischers befinden. Eine durch Regentropfen oder Schmutz eingeschränkte Sicht wirkt sich nachteilig auf Detektionsfunktionen aus.

Bei einem steigenden Grad der Automatisierung von Fahrzeugen ab einem SAE Level 2+ bis SAE Level 4 / Level 5 oder bei automatisierten Parken oder Visualisierung werden zukünftig voraussichtlich an den Seiten eines Fahrzeuges angebrachte Kameras verwendet, die neben einer Anzeige der Umgebung auch der Detektion von seitlichen Objekten dienen. Sind die Linsen durch Wassertropfen oder Schmutz benetzt, kann auch hier die Anzeige- oder Detektionsfunktionalität sehr eingeschränkt sein. Aufgrund von fehlenden Reinigungsmöglichkeiten wie Scheibenwischern führt dies zu einer Degradation oder zu einem Ausfall eines Systems.

Als letztes Beispiel seien Rückfahrkameras genannt, die meist über dem Nummernschild verbaut sehr schnell verschmutzen. Auch hier kann es bei Regen oder Staub zu Beschlag kommen, welcher eine saubere Anzeige erschwert.

Während CNN-basierte Verfahren zur Objekterkennung weitestgehend in der Lage sind, Verschmutzung oder Benetzung der Linsen durch Wassertropfen zumindest bis zu einem gewissen Grad zu kompensieren, erleben Verfahren zur Objekterkennung, die auf Bildmerkmalen (Features) basieren, wie z.B. optischer Fluss oder Structure-From-Motion, durch Verschmutzung eine starke Degradation.

Bekannt sind algorithmische Verfahren zur Detektion von Schmutz oder Niederschlag auf der äußeren Linse einer Kamera oder auf der Windschutzscheibe eines Fahrzeugs.

WO 2013/083120 A1 zeigt ein Verfahren zur Auswertung von Bilddaten einer Fahrzeugkamera, bei dem Informationen über Regentropfen auf einer Scheibe im Sichtbereich der Fahrzeugkamera bei der Auswertung der Bilddaten berücksichtigt werden. Die Informationen über Regentropfen können ihrerseits aus den Bilddaten ermittelt werden. Als Beispiel für die Auswertung der Bilddaten wird eine Erkennung von Objekten genannt, die dann die Informationen gezielt berücksichtigt. Aus einer erkannten Regenstärke kann beispielsweise die Beeinflussung der von der Kamera gesehenen Kanten (Hell/Dunkel oder Farbübergange) abgeschätzt werden.

Entsprechend können kantenbasierte Auswertungserfahren in ihren Schwellwerten angepasst werden. Insbesondere kann aus den Informationen ein Gütekriterium der Bilddaten abgeleitet werden, das dann bei der Auswertung der Bilddaten berücksichtigt wird.

H. Porav et al. zeigen in "I Can See Clearly Now: Image Restoration via De-Raining", 2019 IEEE Int. Conference on Robotics and Automation (ICRA), Montreal, Canada, p. 7087-7093, abgerufen am 13.7.2020 unter: http://www.robots.ox.ac.uk/~mobile/Papers/iGCRA19 porav.pdf ein Verfahren zur Verbesserung von Segmentierungsaufgaben auf Bildern, die durch aufliegende Regentropfen oder Schlieren beeinträchtigt sind. Dazu wurde ein Stereo-Datensatz generiert, bei dem eine Linse durch reale Wassertropfen beeinträchtigt war und die andere Linse klar von Beeinträchtigungen war. Damit wurde ein "Denoising-Generator" trainiert, um den Effekt der Wassertropfen im Kontext der Bildrekonstruktion und Fahrbahnmarkierungs-Segmentierung zu entfernen.

Die vorliegende Erfindung kann als eine Weiterentwicklung des Stands der Technik, wie z.B. aus H.Porav et al. bekannt, verstanden werden.

Es ist Aufgabe der vorliegenden Erfindung, Lösungen hierfür bereitzustellen.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Ein erfindungsgemäßes Verfahren zum maschinellen Lernen betrifft eine Bildkorrektur von Eingangs-Bilddaten einer Kamera, die durch Regen, Lichteinfall und/oder Schmutz beeinträchtigt sind, in Ausgabe-Bilddaten mittels eines künstlichen neuronalen Netzwerks. Das Lernen erfolgt mit einer Vielzahl von Trainings-Bildpaaren derart, dass am Eingang des künstlichen neuronalen Netzwerks jeweils ein erstes Bild mit Regen-, Lichteinfall und/oder Schmutzbeeinträchtigung und als Soll-Ausgabe-Bild ein zweites Bild derselben Szene ohne Beeinträchtigung bereitgestellt wird. Das künstliche neuronale Netzwerk ist derart ausgelegt, dass es ein Sicherheitsmaß c ermittelt, das vom Grad der Benetzung durch Wasser, Lichteinfall und/oder Verschmutzung für ein Eingangs-Bild abhängt. Die Auslegung des Netzwerks kann beispielsweise durch ein entsprechendes Design bzw. eine entsprechende Architektur des künstlichen neuronalen Netzwerks erfolgen. Nach Abschluss des maschinellen Lernens kann das künstliche neuronale Netzwerk das Sicherheitsmaß c für ein neues Eingangsbild bestimmen und ausgeben. Das Sicherheitsmaß c hängt also vom Grad der Beeinträchtigung durch eine Benetzung mit Regen bzw. Wasser, durch Lichteinfall und/oder durch Verschmutzung ab und charakterisiert beim Einsatz des trainierten Netzwerks die Sicherheit, dass eine Bildkorrektur zutreffend ist.

Das Sicherheitsmaß c charakterisiert gewissermaßen die "Unsicherheit", mit der eine Bildkorrektur durch das trainierte neuronale Netzwerk erfolgt.

Mit anderen Worten ist das Sicherheitsmaß c abhängig von der Beeinträchtigung der Eingangsbilddaten und charakterisiert die Sicherheit des Netzwerks, dass die Bildkorrektur des Netzwerks zutreffend ist.

Das künstliche neuronale Netzwerk kann beispielsweise ein Convolutional Neural Network ("faltendes neuronales Netzwerk", CNN) sein.

Die Umwandlung in Ausgabe-Bilddaten "ohne Beeinträchtigung" schließt i. d. R. die Umwandlung in Ausgabe-Bilddaten mit verringerter Beeinträchtigung mit ein.

Die Kamera kann beispielsweise eine in oder an einem Fahrzeug befestigte (monokulare) Kamera sein, die das Umfeld des Fahrzeugs erfasst. Ein Beispiel einer solchen fahrzeuggebundenen Kamera ist eine hinter der Windschutzscheibe im Inneren des Fahrzeugs angeordnete Kamera, die den vor dem Fahrzeug liegenden Bereich der Fahrzeugumgebung durch die Windschutzscheibe erfassen und abbilden kann.

Die Auswirkung einer Beeinträchtigung eines Kamerabilds durch Regen, Lichteinfall oder Schutz ist insofern ähnlich, als sie zu einer (lokalen) Unschärfe im Bild führt. In all diesen Fällen ist eine Bildkorrektur erstrebenswert, die diese Unschärfe im Bild verringert bzw. eliminiert.

Gemäß einer Ausführungsform wird mindestens ein Faktor d als Maß für den Unterschied zwischen dem korrigierten Ausgangsbild und dem beeinträchtigten Eingangsbild ermittelt und dem künstlichen neuronalen Netzwerk im Rahmen des Trainings bereitgestellt. Der Faktor d wird von dem künstlichen neuronalen Netzwerk beim Lernen berücksichtigt, beispielsweise in der Weise, dass das neuronale Netzwerk die Verknüpfung von Eingangsbild, Ausgabebild und Faktor d trainiert. Dadurch kann das trainierte Netzwerk später für ein aktuell erfasstes beeinträchtigtes Kamerabild einen Faktor d schätzen oder bestimmen und ein entsprechend stark korrigiertes Ausgabebild erzeugen (bzw. rekonstruieren). Nach Abschluss des Trainings kann also beispielsweise dem trainierten neuronalen Netzwerk ein Faktor d vorgegeben werden und dadurch der Grad der Korrektur des aktuell erfassten Kamerabildes gesteuert werden.

Der Faktor d kann beispielsweise mittels eines lokalen Vergleichs eines ungestörten Bildes mit dem eines durch Regen oder Schmutz beeinträchtigten Bildes ermittelt werden.

Dabei kann man mit Hilfe von 2D-Filtern, die beispielsweise in den Eingangslayern eines künstlichen neuronalen Netzwerks abgebildet sein können, den Faktor d bestimmen.

Im einem einfachen Ausführungsbeispiel lässt sich der Faktor d als Varianz eines 2D Tiefpassfilters darstellen. Alternativ sind komplexere Kontrastwerte (Structural Similarity) oder Korrelationen (Sum of absolute distances - SAD, Sum of squared distances - SSD, Zero-means normalized cross correlation - ZNCC), die aus den beiden Bildern mit lokalen Filtern berechnet werden, ebenso vorstellbar.

Beispielsweise entsteht bei einer durch Regen oder Schmutz verunreinigten Linse einer Kamera ein gestörtes Bild, welches eine Objekterkennung möglicherweise erschwert. Im Rahmen des maschinellen Lernverfahrens kann ein Faktor d aus einem Vergleich von Soll-Ausgabe-Bild und zugehörigem beeinträchtigtem Eingangsbild bestimmt werden. Diese Bestimmung kann vorab erfolgen, d.h. für jedes Trainings-Bildpaar liegt bereits ein Faktor d vor. Alternativ kann die Bestimmung des Faktors d rein auf Grundlage der Trainings-Bildpaare im Rahmen des Lernverfahrens erfolgen.

Durch den Faktor d kann ein Wert bereitgestellt werden, der den Grad einer möglichen Rekonstruktion des korrigierten Bildes anzeigt und anschließenden Bildverarbeitungs- oder Bildanzeigefunktionen mitgegeben wird. Ein niedriger Wert kann beispielsweise eine hohe Korrektur, ein hoher Wert eine niedrige Korrektur für die weiteren Verarbeitungsstufen anzeigen und bei der Ermittlung der Qualität der erzeugten Objektdaten - ebenso wie das Sicherheitsmaß c - berücksichtigt werden.

In einer Ausführungsform werden die Trainings-Bildpaare erzeugt, indem jeweils ein erstes Bild mit Regen-, Lichteinfall und/oder Schmutzbeeinträchtigung (im optischen Pfad der Kamera) und ein zweites Bild ohne Beeinträchtigung zeitgleich oder unmittelbar aufeinander folgend mit unterschiedlichen Belichtungszeiten aufgenommen bzw. von der Kamera erfasst werden.

Gemäß einer Ausführungsform enthalten die Trainings-Bildpaare mindestens eine Folge von aufeinander folgenden Eingangs- und Ausgangsbildern (als Bilddaten). Mit anderen Worten werden als Bilddaten Bildfolgen (Videosequenzen) eingesetzt. Für das maschinelle Lernen ist in diesem Fall mindestens eine Eingangs-Videosequenz und eine Soll-Videosequenz erforderlich.

Bei der Verwendung von Bildfolgen können vorteilhaft zeitliche Aspekte bzw. Zusammenhänge in der Rekonstruktion (bzw. Bildkorrektur) berücksichtigt werden. Als Beispiel seien Regentropfen oder Schmutzpartikel genannt, die sich mit der Zeit bewegen. Dadurch entstehen Bereiche im Bild, die zu einem Zeitpunkt t eine klare Sicht und zu einem Zeitpunkt t+1 eine durch Regen gestörte Sicht enthielten. Durch die Verwendung von Bildfolgen können Informationen in den klaren Bildbereichen zur Rekonstruktion in den durch Regen oder Schmutz gestörten Sichtbereichen verwendet werden.

Der zeitliche Aspekt kann insbesondere bei den durch Schmutz bedeckten Bereichen helfen, ein klares Bild zu rekonstruieren. In einem Beispiel seien Bereich der Linse durch Schmutz bedeckt, und andere Bereiche frei. Zu einem Zeitpunkt t kann ein Objekt vollständig gesehen werden, zu einem anderen Zeitpunkt t+1 verhindert Schmutz die vollständige Aufnahme des Objektes. Durch Bewegung des Objektes und/oder der Bewegung der Kamera beim Fahren kann nun die gewonnene Information über das Objekt im Bild zum Zeitpunkt t helfen, das Bild zu einem Zeitpunkt t+1 zu rekonstruieren.

In einer Ausführungsform weist das künstliche neuronale Netz eine gemeinsame Eingangsschnittstelle für zwei separate Ausgangsschnittstellen auf. Die gemeinsame Eingangsschnittstelle weist geteilte Merkmalsrepräsentationsschichten auf. An der ersten Ausgangsschnittstelle werden korrigierte (d.h. umgewandelte) Bilddaten ausgegeben. An der zweiten Ausgangsschnittstelle werden ADAS-relevante Detektionen mindestens einer ADAS-Detektionsfunktion ausgegeben. ADAS steht für fortschrittliche Systeme zum assistierten oder automatisierten Fahren (Englisch: Advanced Driver Assistance Systems). ADAS-relevante Detektionen sind somit z.B. Objekte, Gegenstände, Verkehrsteilnehmer, die für ADAS/AD Systeme wichtige Eingangsgrößen darstellen. Das künstliche neuronalen Netzwerk umfasst ADAS-Detektionsfunktionen, z.B. eine Spurerkennung, eine Objekterkennung, eine Tiefenerkennung (3D-Schätzung der Bildbestandteile), semantische Erkennung, oder dergleichen mehr. Im Rahmen des Trainings werden die Ausgaben beider Ausgangsschnittstellen optimiert.

Ein Verfahren zum Korrigieren von Eingangs-Bilddaten einer Kamera, die durch Regen, Lichteinfall und/oder Schmutz beeinträchtigt sind, umfasst die Schritte:
a) Von der Kamera aufgenommene Eingangs-Bilddaten, die durch Regen, Lichteinfall und/oder Schmutz beeinträchtigt sind, werden einem trainierten künstlichen neuronalen Netzwerk bereitgestellt,
b) das trainierte künstliche neuronale Netzwerk ist dazu konfiguriert, die Eingangs-Bilddaten mit Regen-, Lichteinfall und/oder Schmutzbeeinträchtigung in Ausgabe-Bilddaten ohne Beeinträchtigung umzuwandeln und ein Sicherheitsmaß c zu ermitteln, das vom Grad der Benetzung durch Wasser, Lichteinfall und/oder Verschmutzung für ein Bild (bzw. für jedes Bild) der Eingangs-Bilddaten abhängig ist und die Sicherheit des Netzwerks charakterisiert, dass die Bildkorrektur des Netzwerks zutreffend ist, und
c) das trainierte künstliche neuronale Netzwerk ist dazu konfiguriert, die Ausgabe-Bilddaten und das bzw. die ermittelte(n) Sicherheitsmaß(e) c auszugeben.

Die korrigierten Ausgabe-Bilddaten ermöglichen vorteilhafterweise eine bessere maschinelle Objekterkennung auf den Ausgabe-Bilddaten, z.B. eine herkömmliche Fahrspur-/Objekt- oder Verkehrszeichendetektion.

Gemäß einer Ausführungsform wird der Faktor d geschätzt und bei der Schätzung wird die Beeinträchtigung der aktuellen erfassten Eingangs-Bilddaten berücksichtigt. Kumulativ oder alternativ kann die Schätzung des Faktors d der aktuell erfassten Eingangs-Bilddaten den oder die Faktor(en) d der vorhergehend erfassten Bilddaten berücksichtigen.

Gemäß einer Ausführungsform kann bei der Bestimmung bzw. Schätzung des Faktors d eine zeitliche Entwicklung des Faktors d berücksichtigt werden. Hierzu gehen in die Schätzung die zeitliche Entwicklung des Faktors d und eine Sequenz von Eingangsbildern ein.

In einer Ausführungsform ist die Kamera eine fahrzeuggebundene Umfelderfassungskamera.

Gemäß einer Ausführungsform mit einer fahrzeuggebundenen Umfelderfassungskamera werden bei der Bestimmung des Faktors d Informationen über die aktuelle Umgebungssituation des Fahrzeugs berücksichtigt. Informationen über die aktuelle Umgebungssituation können beispielsweise Regensensordaten, externe (V2X-Daten bzw. Daten eines Navigationssystems, z.B. GPS-Empfänger mit digitaler Karte) ortsaufgelöste Wetter- und/oder Sonnenstandsinformationen, Fahrsituationsinformationen (Landstraße, Stadt, Autobahn, Tunnel, Unterführung) umfassen. Diese Informationen können (zumindest teilweise) auch über eine Bildverarbeitung aus den Kamerabilddaten gewonnen werden.

Beispielsweise kann der aktuelle Faktor d basierend auf Umgebungssituationsinformationen und aus der zeitlichen Reihenfolge von Bildern als auch aus der Historie des Faktors d geschätzt werden.

Die Schätzung des Faktors d kann somit beim Einsatz eines trainierten künstlichen neuronalen Netzwerks dynamisch erfolgen.

In einer Ausführungsform erfolgt eine Ausgabe der korrigierten Bilddaten der fahrzeuggebundenen Umfelderfassungskamera und des ermittelten Sicherheitsmaßes (bzw. der ermittelten Sicherheitsmaße) und optional auch des Faktors d an mindestens eine ADAS-Detektionsfunktion, welche ADAS-relevante Detektionen ermittelt und ausgibt. ADAS-Detektionsfunktionen können bekannte Kanten- bzw. Mustererkennungsverfahren umfassen sowie Erkennungsverfahren, die mittels eines künstlichen neuronalen Netzwerks relevante Bildobjekte erkennen und optional klassifizieren können.

In einer alternativen Ausführungsform kann der Ansatz erweitert werden und das künstliche neuronale Netzwerk zur Korrektur der Bilddaten kann mit einem neuronalen Netzwerk für ADAS-Detektionsfunktionen, z.B. Spurerkennung, Objekterkennung, Tiefenerkennung, semantische Erkennung, kombiniert werden. Somit wird kaum zusätzlicher Aufwand in der Rechenzeit verursacht. Nach dem Training kann die (erste) Ausgangsschnittstelle für die Ausgabe der umgewandelten (korrigierten) Bilddaten eliminiert werden, so dass bei Einsatz im Fahrzeug nur die (zweite) Ausgangsschnittstelle für die ADAS-Detektionen vorhanden ist.

In einer weiteren Ausführungsform kann das gelernte Verfahren statt einer Rekonstruktion von unklaren bzw. beeinträchtigten Bilddaten umgekehrt genutzt werden, um aus dem gelernten Rekonstruktionsprofil in aufgenommenen Bilddaten künstlich Regen oder Schmutz für eine Simulation zur Absicherung hinzuzufügen.

In einer weiteren Ausführungsform kann das gelernte Rekonstruktionsprofil auch zur Bewertung der Güte einer künstlichen Regensimulation in aufgenommenen Bilddaten herangezogen werden.

Gemäß einer weiteren Ausführungsform kann das Verfahren bei Augmented Reality und im Bereich Dash-Cam und Unfall Recordings angewendet werden.

Die Erfindung betrifft weiterhin eine Vorrichtung mit mindestens einer Datenverarbeitungseinheit konfiguriert zum Korrigieren von Eingangs-Bilddaten einer Kamera, die durch Regen, Lichteinfall und/oder Schmutz beeinträchtigt sind, in Ausgabe-Bilddaten. Die Vorrichtung umfasst: eine Eingangsschnittstelle, ein trainiertes künstliches neuronales Netzwerk und eine (erste) Ausgangsschnittstelle.

Die Eingangsschnittstelle ist konfiguriert zum Empfangen von Eingangs-Bilddaten, die durch Regen, Lichteinfall und/oder Schmutz beeinträchtigt sind, die von der Kamera erfasst worden sind. Das trainierte künstliche neuronale Netzwerk ist dazu konfiguriert, die beeinträchtigten Eingangs-Bilddaten in Ausgabe-Bilddaten ohne Beeinträchtigung umzuwandeln und ein Sicherheitsmaß c zu ermitteln, das vom Grad der Benetzung durch Wasser, Lichteinfall und/oder Verschmutzung für ein Bild bzw. für jedes Bild der Eingangs-Bilddaten abhängig ist und die Sicherheit des Netzwerks charakterisiert, dass die Bildkorrektur des Netzwerks zutreffend ist.

Die (erste) Ausgangsschnittstelle ist dazu konfiguriert, die umgewandelten (korrigierten) Bilddaten und das bzw. die ermittelte(n) Sicherheitsmaß(e) c auszugeben.

Gemäß einer Ausführungsform enthalten die Eingangsbilddaten mindestens eine Folge von aufeinander folgend erfassten Eingangsbildern als Eingangs-Bilddaten und das künstliche neuronale Netzwerk ist anhand von mindestens einer Folge von aufeinander folgenden Eingangs- und Ausgangsbildern als Bilddaten trainiert worden.

Die Vorrichtung bzw. die Datenverarbeitungseinheit kann insbesondere einen Mikrocontroller oder -prozessor, eine Zentrale Verarbeitungseinheit (CPU), ein Grafische Verarbeitungseinheit (GPU), einen Digital Signal Processor (DSP), einen ASIC (Application Specific Integrated Circuit), einen FPGA (Field Programmable Gate Array) und dergleichen mehr sowie Software zur Durchführung der entsprechenden Verfahrensschritte umfassen.

Gemäß einer Ausführungsform ist die Datenverarbeitungseinheit in eine hardwarebasierter Bildvorverarbeitungsstufe (Image Signal Processor, ISP) implementiert.

In einer Ausführungsform ist das trainierte künstliche neuronale Netzwerk zur Bildkorrektur ein Bestandteil eines fahrzeugseitigen ADAS-Detektions-Neuronalen-Netzwerks, z.B. zur semantischen Segmentierung, Fahrspurdetektion bzw. Objektdetektion, mit einer geteilten Eingangsschnittstelle (Eingangs- bzw. Merkmalsrepräsentationsschichten), und zwei separaten Ausgangsschnittstellen (Ausgangsschichten) ist, wobei die erste Ausgangsschnittstelle zur Ausgabe der umgewandelten Ausgabebilddaten und die zweite Ausgangsschnittstelle zur Ausgabe der ADAS-Detektionen (Bilderkennungsdaten) konfiguriert sind.

Die Erfindung betrifft weiterhin ein Computer Programmelement, welches, wenn damit eine Datenverarbeitungseinheit programmiert wird, die Datenverarbeitungseinheit dazu anweist, ein Verfahren zur Bildkorrektur von Eingangs-Bilddaten einer Kamera in Ausgabe-Bilddaten durchzuführen.

Die Erfindung betrifft weiterhin ein Computerlesbares Speichermedium, auf dem ein solches Programmelement gespeichert ist.

Die Erfindung betrifft weiterhin die Verwendung eines Verfahrens zum maschinellen Lernen einer Bildkorrektur von Eingangs-Bilddaten einer Kamera in Ausgabe-Bilddaten zum Trainieren eines künstlichen neuronalen Netzwerks einer Vorrichtung mit mindestens einer Datenverarbeitungseinheit.

Die vorliegende Erfindung kann somit in digitalen elektronischen Schaltkreisen, Computer-Hardware, Firmware oder Software implementiert sein.

Wesentliche Vorteile sind:
- Ermöglichung einer Objekterkennung bei Beeinträchtigung (z.B. Beschlag) von Kameras
- Generierung eines Bilddatenstromes für Human und Computer Vision aus einem neuronalen Netzwerk für eine optimierte Korrespondenzsuche (Suche nach Feature-Übereinstimmung).

Neben dem Einsatz in Kraftfahrzeugen gibt es mannigfaltige Anwendungsgebiete:
- Assistenzsysteme in Bussen, Bahnen, Flugzeugen sowie Robotiksysteme
- Alle Anwendungen von Feature-basierter Detektion, z.B. auf optischem Fluss, Structure-from-Motion etc. basierende Detektionsverfahren, die bei Verschmutzung/Regen-/Lichtbeeinträchtigungen eine dramatische Degradation durch fehlende Features erfahren
- somit insbesondere Assistenzsysteme, welche auf optischem Fluss zur Feature-Suche basieren
- Online-Kalibrierung von Kameras, welche bei Benetzung oder Verschmutzung aufgrund fehlender Features oder geringem Kontrast ebenfalls dramatisch an Performance verliert.

Im Folgenden werden Ausführungsbeispiele und Fig. näher beschrieben. Dabei zeigen
- Fig. 1:: schematisch ein Fahrzeug mit einer Umfelderfassungskamera;
- Fig. 2:: ein System zur Korrektur von beeinträchtigten Kamerabildern;
- Fig. 3:: ein System mit einem ersten neuronalen Netz zur Bildkorrektur und einem nachgelagerten zweiten neuronalen Netz für Detektionsfunktionen;
- Fig. 4:: ein System mit kombinierter Bildkorrektur und Detektionsfunktionen; und
- Fig. 5: ein abgewandeltes System, bei dem die Bildkorrektur nur im Rahmen des Trainings berechnet und ausgegeben wird.

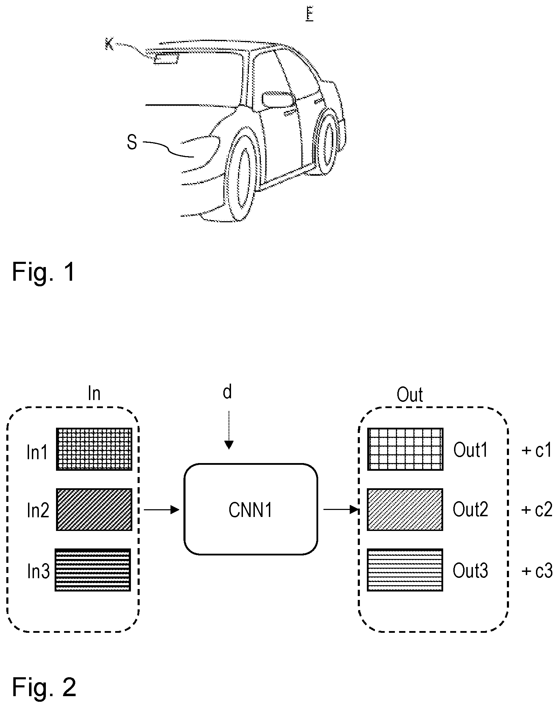

Fig. 1 zeigt schematisch ein Fahrzeug F mit einer Umfelderfassungskamera K, die im Innenraum des Fahrzeugs hinter der Windschutzscheibe angeordnet ist und das Umfeld bzw. die Umgebung des Fahrzeugs durch diese erfasst. Bei Dunkelheit beleuchten die Frontscheinwerfer S des Fahrzeugs F das Umfeld vor dem Fahrzeug, welches von der Kamera K erfasst wird. Die Kamera K kann insbesondere eine monokulare Kamera sein. Mit der Kamera K wird eine Folge von Bildern der Fahrzeugumgebung erfasst. Sofern sich das Fahrzeug F bewegt, ändert sich der Umgebungsbereich kontinuierlich, den die Kamera K abbildet.

Befindet sich Regen oder Schmutz auf der Windschutzscheibe bzw. einer äußeren Kameralinse oder fällt Störlicht, z.B. Sonnenlicht bei tiefstehender Sonne oder starker Reflexion, in den optischen Pfad der Kamera K ein, führt dies zu gravierenden Beeinträchtigungen in den Bildern, die die Kamera K erfasst.

Fig. 2 zeigt schematisch eine allgemeine Übersicht eines Systems zur Korrektur von Kamerabildern bei Regen, Lichteinfall und/oder Verschmutzung. Wesentlicher Bestandteil ist ein künstliches neuronales Netzwerk CNN1, welches in einer Trainingsphase lernt, einem Satz von Trainings-Eingangsbildern In (In1, In2, In3, ...) einen Satz von korrespondieren korrigierten Trainings-(Soll-)Ausgabebildern Out (Out1, Out2, Out3, ...) zuzuordnen. Zuordnen heißt hierbei, dass das neuronale Netz CNN1 lernt, ein korrigiertes Bild zu generieren. Ein Eingangsbild (In1, In2, In3, ...) kann z.B. eine Straßenszene bei Regen enthalten, auf dem mit dem menschlichen Auge nur unscharfe bzw. verschwommene größere Objekte wie z.B. eine große Fahrbahnmarkierung, die ein Fahrrad darstellt, und der Himmel erkennbar sind. Auf dem korrespondierenden korrigierten Bild (Out1, Out2, Out3, ...) sind zusätzlich die Konturen einer Straßenkreuzung, eine Ampel, ein Baum und eine Straßenlaterne erkennbar. Realistische photographische Abbildungen für Farbbilder mit und ohne Beeinträchtigungen durch Regentropfen sind beispielsweise in der Abbildung Fig. 1 von Porav et al. zu sehen.

Optional dient ein Faktor d als zusätzliche Eingangsgröße für das neuronale Netz CNN1. Der Faktor d ist ein Steuerungsparameter, der den Grad der Korrektur der Beeinträchtigung (Regen, Lichteinfall bzw. Schmutz) des Bildes steuert. Beim Training kann der Faktor d für ein Bildpaar aus Trainingsbild und korrigiertem Bild (In1, Out1; In2, Out2; In3, Out3; ...) vorab oder im Rahmen des Trainings aus dem Bildpaar (In1, Out1; In2, Out2; In3, Out3; ...) ermittelt und dem neuronalen Netz CNN1 bereitgestellt werden. Dadurch kann der Faktor d mitgelernt werden.

Beim Einsatz des trainierten neuronalen Netzes CNN1 kann über eine Vorgabe eines Faktors d gesteuert werden, wie stark das neuronale Netz CNN1 ein aktuell erfasstes Bild korrigiert - man kann sich den Faktor d auch als einen externen Regressionsparameter vorstellen (mit einer beliebigen Abstufung). Da der Faktor d möglichen Schwankungen im Bereich von +/- 10% unterliegen kann, wird dies während des Trainings berücksichtigt. Der Faktor d kann während des Trainings um circa +/-10% verrauscht werden (z.B., während der verschiedenen Epochen des Trainings des neuronalen Netzwerkes), um während der Inferenz im Fahrzeug robust gegenüber Fehlschätzungen des Faktors d im Bereich von ca. +/- 10% zu sein. Mit anderen Worten liegt die nötige Genauigkeit vom Faktor d im Bereich von +/- 10% - somit ist das neuronale Netz CNN1 robust gegenüber Abweichungen bei Schätzungen von diesem Parameter.

Alternativ oder ergänzend kann der Faktor d für eine erfolgte Bildkorrektur durch das trainierte neuronale Netzwerk CNN1 ausgegeben werden. Dadurch erhalten nachgelagerte Bilderkennungsfunktionen eine Information darüber, wie stark das ursprünglich erfasste Bild korrigiert wurde.

Das künstliche neuronale Netzwerk CNN1 ist derart ausgelegt, dass es ein Sicherheitsmaß c ermittelt, das vom Grad der Benetzung durch Wasser, Lichteinfall und/oder Verschmutzung für ein Eingangs-Bild abhängt. Die Auslegung des Netzwerks kann beispielsweise durch ein entsprechendes Design der Architektur des künstlichen neuronalen Netzwerks CNN1 erfolgen. Nach Abschluss des maschinellen Lernens kann das künstliche neuronale Netzwerk CNN1 das Sicherheitsmaß c für ein neues Eingangsbild bestimmen und ausgeben. Das Sicherheitsmaß c hängt also vom Grad der Beeinträchtigung durch eine Benetzung mit Regen bzw. Wasser, durch Lichteinfall und/oder durch Verschmutzung ab und charakterisiert beim Einsatz des trainierten Netzwerks die Sicherheit, dass eine Bildkorrektur zutreffend ist.

In Fig. 2 sind drei Bildpaare In1 + Out1, In2 + Out2, In3 + Out3 schematisch dargestellt. Entsprechend wird durch das trainierte neuronale Netzwerk CNN1 für jedes Bildpaar ein Sicherheitsmaß c1, c2 bzw. c3 ermittelt und ausgegeben.

Da die Qualität der Korrektur von Bildern von Regen, Lichteinfall oder Verschmutzung abhängig ist von zahlreichen Faktoren (wie z.B. das Vorhandensein eines ähnlichen Falls in den Trainingsdaten, ausreichende Belichtung für eine mögliche Korrektur, Vermeidung von mehrdeutigen Szenarien, etc.), gibt das Netzwerk neben der Korrektur des Bildes ein Maß für die Sicherheit aus, mit welcher das Netzwerk seine Entscheidung trifft. Dieses Sicherheitsmaß c kann eine der folgenden Umsetzungsformen oder eine Kombination dieser umfassen:
- Ein Konfidenzmaß c_Prob: Hierbei wird die Ausgabe des Netzwerkes derart kalibriert, dass diese probabilistisch interpretiert werden kann als Wahrscheinlichkeit, mit welcher das Netzwerk die richtige Entscheidung trifft. Werte hierfür sind auf einen Bereich zwischen [0,1] normiert und diese entsprechen dem Spektrum von 0% Wahrscheinlichkeit bis 100% Wahrscheinlichkeit, dass das Netzwerk eine korrekte Korrektur eines Bildes berechnet hat. Diese Kalibrierung kann nach Abschluss des eigentlichen maschinellen Lernverfahrens anhand eines Trainingsbilddatensatzes durch die anschließende Überprüfung der Güte des Lernens anhand eines Validierungsbilddatensatzes erfolgen. Auch der Validierungsbilddatensatz enthält Bildpaare von jeweils einem ersten Bild mit Regen-, Lichteinfall und/oder Schmutzbeeinträchtigung und als korrespondierendes Soll-Ausgabe-Bild ein zweites Bild derselben Szene ohne Beeinträchtigung. In der Praxis kann ein Teil der Eingangs- und Soll-Ausgabebilder zurückbehalten, d.h. nicht für das maschinelle Lernverfahren verwendet, und anschließend zur Validierung verwendet werden.
- Ein Streuungsmaß ähnlich einer Standardabweichung c_Dev: Hierbei wird eine Unsicherheit der Netzwerkausgabe derart geschätzt, dass diese die Streuung des Netzwerkausgangs beschreibt. Dies kann unterschiedlich umgesetzt werden. Möglichkeiten sind hierfür die Unterteilung in Mess- und Modellunsicherheit. Die Messunsicherheit bezieht sich auf Unsicherheiten, die durch die Eingangsdaten verursacht werden, z.B. leichte Störungen. Diese können über einen weiteren Ausgang dem Netzwerk hinzugefügt werden und durch eine Änderung der Fehlerfunktion trainiert werden. Die Modellunsicherheit bezieht sich auf Unsicherheiten, die durch die begrenzte Abbildungsgenauigkeit und Generalisierbarkeit eines Netzwerkes verursacht werden. Dies bezieht sich auf Faktoren, wie Umfang der Trainingsdaten und Architektur des Netzwerkdesigns. Die Modellunsicherheit lässt sich schätzen, z.B., durch Monte Carlo Dropout oder Netzwerk-Ensembles. Die Modellunsicherheit und die Messunsicherheit können additiv zusammengefasst werden.
- Eine Kombination aus Konfidenz- und Streuungsmaß

Das Sicherheitsmaß c kann für das gesamte Bild, Bildbereiche oder die einzelnen Pixel des Bildes berechnet werden.

Basierend auf dem Sicherheitsmaß c können folgende Entscheidungen getroffen werden:
- **c_Prob** niedrig: Das Netzwerk hat eine niedrige Konfidenz in seine Schätzung - Fehlschätzungen treten vermehrt auf.
- c_Prob hoch: Das Netzwerk hat eine hohe Konfidenz in seine Schätzung - die Bildkorrektur ist in den meisten Fällen korrekt.
- c_Dev niedrig: Die Streuung der Bildkorrektur des Netzwerkes ist gering - somit prädiziert das Netzwerk eine sehr genaue Bildkorrektur.
- c_Dev hoch: Die geschätzte Streuung der Bildkorrektur ähnlich einer Standardabweichung ist hoch und die Ausgabe des Netzwerkes ist ungenauer/weniger scharf - geringe Änderung der Eingangsdaten oder in der Modellierung des Netzwerkes würden Abweichungen in der Bildkorrektur verursachen.
- Kombinationen:
   o c_Prob hoch und c_Dev niedrig: eine sehr zuverlässige und genaue Bildkorrektur, die mit hoher Sicherheit angenommen werden kann
   o c_Prob niedrig und c_Dev hoch: eine sehr unsichere und ungenaue Bildkorrektur, die eher abgelehnt werden würde
   o c_Prob hoch und c_Dev hoch bzw. c_Prob niedrig und c_Dev niedrig: diese Korrekturen sind mit Unsicherheiten behaftet und hier ist eine vorsichtige Verwendung der Bildkorrekturen zu empfehlen

Die Hinzunahme der Sicherheitsmaße ist insbesondere für sicherheitskritische Funktionen relevant.

Eine Möglichkeit zur Erzeugung der Trainingsdaten (Trainingsbilder (In1, In2, In3, ...) und zugeordnete korrigierte Bilder (Out1, Out2, Out3, ...)) besteht in der Aufnahme von Bilddaten mit einem "Stereokameraaufbau" wie in Porav et al. anhand der dortigen Fig. 8 beschrieben: vor zwei identischen Kameramodulen mit geringem Abstand zueinander wird eine zweigeteilte Kammer mit transparenten Scheiben angeordnet, die Kammer z.B. vor dem rechten Stereokameramodul wird mit Wassertropfen besprüht, während die Kammer vor dem linken Stereokameramodul von Beeinträchtigungen freigehalten wird.

Um eine Beeinträchtigung durch Lichteinfall in analoger Weise zu simulieren, kann z.B. eine Lichtquelle nur auf eine Kammer gerichtet werden. Oder im Fall von Schmutz kann dieser ebenfalls nur auf einer Kammer angebracht werden.

Alternativ kann man zur Erzeugung der Trainings-Bildpaare unbeeinträchtigte Bilder nehmen, und diese mit Renderingverfahren, welche Auswirkungen von Regen, Lichteinfall oder Schmutz im Bild simulieren, schlechtrechnen.

Wenn das neuronale Netz CNN1 trainiert ist, erfolgt eine Bildkorrektur nach folgendem Schema:
Eingangsbild → CNN1
Optional: Faktor d →CNN1
CNN1 → korrigiertes Ausgangs-/Ausgabebild + Sicherheitsmaß c.

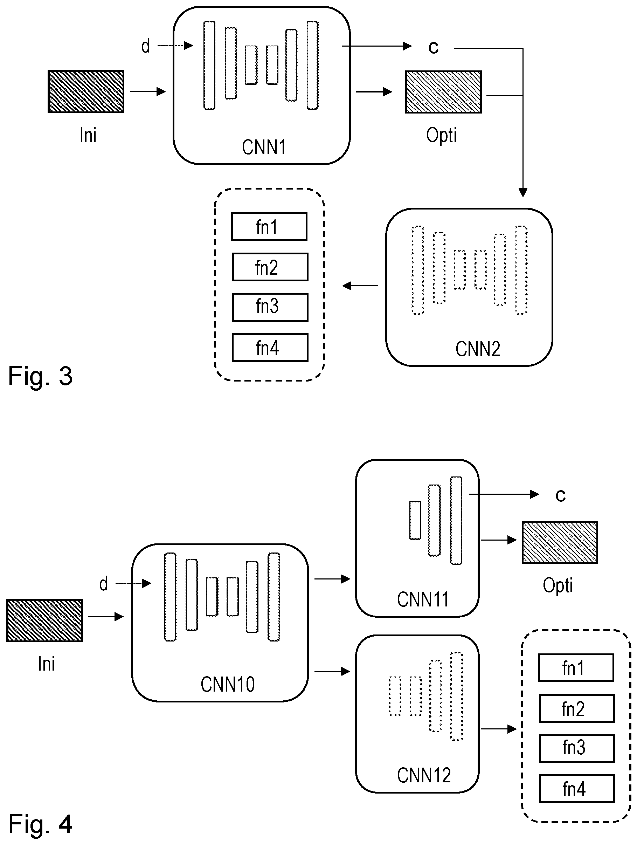

Die Fig. 3 bis 5 zeigen Ausführungsbeispiele für mögliche Kombinationen eines ersten Netzwerks für die Bildkorrektur mit einem oder mehreren Netzwerken der Funktionen für Fahrerassistenzfunktionen und Automatisiertes Fahren geordnet nach dem Verbrauch an Rechenressourcen.

Fig. 3 zeigt ein System mit einem ersten neuronalen Netz CNN1 zur Bildkorrektur mit einem nachgelagerten zweiten neuronalen Netz CNN2 für Detektionsfunktionen (fn1, fn2, fn3, fn4). Die Detektionsfunktionen (fn1, fn2, fn3, fn4) sind hierbei Bildverarbeitungsfunktionen, die für ADAS oder AD-Funktionen relevante Objekte, Strukturen, Eigenschaften (allgemein: Merkmale) in den Bilddaten detektieren. Viele solcher Detektionsfunktionen (fn1, fn2, fn3, fn4), die auf maschinellem Lernen beruhen, sind bereits entwickelt oder Gegenstand aktueller Entwicklung (z. B: Verkehrszeichenklassifikation, Objektklassifikation, semantische Segmentierung, Tiefenschätzung, Fahrspurmarkierungserkennung und -lokalisierung). Auf korrigierten Bildern (Opti) liefern Detektionsfunktionen (fn1, fn2, fn3, fn4) des zweiten neuronalen Netzes CNN2 bessere Ergebnisse als auf den ursprünglichen Eingangsbilddaten (Ini) bei schlechten Sichtverhältnissen.

Wenn die beiden neuronalen Netze CNN1 und CNN2 trainiert sind, kann ein Verfahren nach folgendem Schema ablaufen:
Eingangsbild (Ini), optional Faktor d → CNN1 → korrigiertes Ausgangs-/Ausgabebild (Opti) + Sicherheitsmaß c → CNN2 für Detektionsfunktionen (fn1, fn2, fn3, fn4) → Ausgabe der Detektionen: Objekte, Tiefe, Spur, Semantik, ...

Fig. 4 zeigt ein neuronales Netzwerk CNN10 für die Bildkorrektur eines Eingangsbildes (Ini) ggfs. gesteuert durch einen Faktor d, welches Merkmalsrepräsentationsschichten (als Eingangs- bzw. untere Schichten) mit dem Netzwerk für die Detektionsfunktionen (fn1, fn2, fn3, fn4) teilt. In den Merkmalsrepräsentationsschichten des neuronalen Netzwerks CNN10 werden gemeinsame Merkmale für die Bildkorrektur und für die Detektionsfunktionen gelernt.

Das neuronale Netz CNN10 mit geteilten Eingangsschichten und zwei separaten Ausgängen weist einen ersten Ausgang CNN 11 zur Ausgabe des korrigierten Ausgangs-/Ausgabebildes (Opti) und des Sicherheitsmaßes c sowie einen zweiten Ausgang CNN 12 zur Ausgabe der Detektionen: Objekte, Tiefe, Spur, Semantik, etc. auf.

Dadurch, dass beim Training die Merkmalsrepräsentationsschichten sowohl hinsichtlich der Bildkorrektur als auch der Detektionsfunktionen (fn1, fn2, fn3, fn4) optimiert werden, bewirkt eine Optimierung der Bildkorrektur zugleich eine Verbesserung der Detektionsfunktionen (fn1, fn2, fn3, fn4).

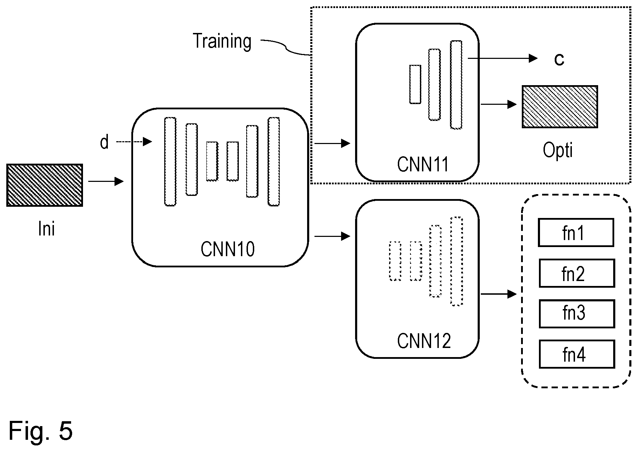

Falls nun eine Ausgabe des korrigierten Bildes (Opti) nicht gewünscht bzw. nicht erforderlich ist, kann der Ansatz weiter variiert werden, wie anhand von Fig. 5 erläutert wird.

Fig. 5 zeigt einen auf dem System der Fig. 4 basierenden Ansatz zur neuronalen-Netz-basierten Bildkorrektur durch Optimierung der Merkmale. Um Rechenzeit zu sparen, werden die Merkmale für die Detektionsfunktionen (fn1, fn2, fn3, fn4) während des Trainings hinsichtlich Bildkorrektur und hinsichtlich der Detektionsfunktionen (fn1, fn2, fn3, fn4) optimiert.

Zur Laufzeit, d.h. beim Einsatz des trainierten neuronalen Netzes (CNN10, CNN11, CNN12), werden keine korrigierten Bilder (Opti) berechnet.

Dennoch sind die Detektionsfunktionen (fn1, fn2, fn3, fn4) - wie bereits erläutert - durch das gemeinsame Training von Bildkorrektur und Detektionsfunktionen verbessert verglichen mit einem System mit nur einem neuronalen Netz (CNN2) für Detektionsfunktionen (fn1, fn2, fn3, fn4), bei dem im Training auch nur die Detektionsfunktionen (fn1, fn2, fn3, fn4) optimiert worden sind.

In der Trainingsphase wird durch eine zusätzliche Ausgangsschnittstelle (CNN11) das korrigierte Bild (Opti) ausgegeben und mit der Ground Truth (dem korrespondierenden korrigierten Trainingsbild) verglichen. In der Testphase bzw. zur Laufzeit kann dieser Ausgang (CNN11) weiterverwendet werden oder, um Rechenzeit zu sparen, abgeschnitten werden. Die Gewichte für die Detektionsfunktionen (fn1, fn2, fn3, fn4) werden bei diesem Training mit dem zusätzlichen Ausgang (CNN11) dahingehend modifiziert, dass sie die Bildkorrekturen für die Detektionsfunktionen (fn1, fn2, fn3, fn4) berücksichtigen. Die Gewichte der Detektionsfunktionen (fn1, fn2, fn3, fn4) lernen somit implizit die Information über die Bildkorrektur.

Weitere Aspekte und Ausführungsformen eines Assistenzsystems, welches die Bilddaten des zugrundliegenden Kamerasystems trotz Beeinträchtigung durch Regen, Lichteinfall oder Schmutz algorithmisch in eine Darstellung umrechnet, welche einer Aufnahme ohne diese Beeinträchtigungen entspricht, werden im Folgenden dargelegt. Das umgerechnete Bild kann dann entweder zu reinen Anzeigezwecken oder als Input für Feature-basierte Erkennungsalgorithmen dienen.
1) In einer ersten Ausführung basiert die Berechnung in einem System beispielsweise auf einem neuronalen Netz, welches einer Detektions- oder Anzeigeeinheit vorgelagert ein Eingangsbild mit Beschlag, Schmutz oder Wassertropfen mit wenig Kontrast und Farbinformationen in eine bereinigte Repräsentation umwandelt. Für diese Aufgabe wurde das neuronale Netz mit einem Datensatz bestehend aus "beschlagenen Eingangsbildern" und den dazugehörigen "bereinigten Bildern" trainiert.
2) Insbesondere wird durch die Verwendung von bereinigten Bildern das neuronale Netz dahingehend trainiert, dass in den zu verbessernden Bildpaaren vorkommende Features trotz Beschlag oder Schmutz für eine spätere Korrespondenzsuche oder Objekterkennung erhalten und bestenfalls sogar verstärkt werden.
3) Beim Trainieren des Netzes zur Bildkorrektur/-verbesserung können Feature-basierte Verfahren zur Anzeige und Objektdetektion berücksichtigt werden, so dass das Verfahren für die zu erkennenden Features spezialisiert wird und diese Features explizit für eine nachfolgende Bearbeitung hervorhebt.
4) In einer weiteren Ausführung kann das Verfahren zur Bildverbesserung bzw. -korrektur in einer hardwarebasierten Bildvorverarbeitungsstufe, der ISP, integriert sein. Diese ISP wird hardwareseitig um ein neuronales Netz ergänzt, welches die Umwandlung vornimmt und die aufbereiteten Informationen mit den Originaldaten möglichen Detektions- oder Anzeigeverfahren zur Verfügung stellt.
5) In einer weiteren Anwendung können dem Netz zum Trainieren neben Verschmutzungs- oder Beschlaginformationen Informationen zur Bildqualität zur Verfügung gestellt werden. Dahingehend kann das System und das Verfahren dahingehend optimiert werden, dass es für eine Objekterkennung und Human-Vision optimierte Bilddaten berechnet.

Neben der Korrektur von Bildern bei Beschlag oder Wassertropfen erkennt das System Wassertropfen oder Schmutz für beispielsweise eine Aktivierung eines Scheibenwischers oder der Anzeige zur Aufforderung der Reinigung einer Satellitenkamera. Zusammen mit einer Helligkeitsdetektion lässt sich auf diese Weise neben der Korrektur der Bilder eine Funktion der Rain Light Detection realisieren.

## Patentansprüche

1. Verfahren zum maschinellen Lernen einer Bildkorrektur von Eingangs-Bilddaten einer Kamera (K), die durch Regen, Lichteinfall und/oder Schmutz beeinträchtigt sind, in Ausgabe-Bilddaten mittels eines künstlichen neuronalen Netzwerks (CNN1, CNN10, CNN11, CNN12), wobei das Lernen mit einer Vielzahl von Trainings-Bildpaaren (In1, Out1; In2, Out2; In3, Out3; ...) derart erfolgt, dass am Eingang des künstlichen neuronalen Netzwerks (CNN1, CNN10) jeweils ein erstes Bild (In1, In2, In3, ...) mit Regen-, Lichteinfall und/oder Schmutzbeeinträchtigung und als Soll-Ausgabe-Bild ein zweites Bild (Out1, Out2, Out3, ...) derselben Szene ohne Beeinträchtigung bereitgestellt wird, **dadurch gekennzeichnet, dass**
das künstliche neuronale Netzwerk (CNN1, CNN10, CNN11, CNN12) derart ausgelegt ist, dass es ein Sicherheitsmaß c ermittelt, das vom Grad der Benetzung durch Wasser, Lichteinfall und/oder Verschmutzung für ein Eingangs-Bild abhängt und die Sicherheit des Netzwerks charakterisiert, dass die Bildkorrektur des Netzwerks zutreffend ist, wobei
das künstliche neuronale Netzwerk (CNN1, CNN10, CNN11, CNN12) nach Abschluss des maschinellen Lernens das Sicherheitsmaß c für ein neues Eingangsbild bestimmen und ausgeben kann, und
wobei mindestens ein Faktor d als Maß für den Unterschied zwischen dem Soll-Ausgabe-Bild (Out1, Out2, Out3, ...) und dem beeinträchtigten Eingangsbild (In1, In2, In3, ...) eines Trainingsbildpaares (In1, Out1; In2, Out2; In3, Out3; ...) ermittelt und dem künstlichen neuronalen Netzwerk als zusätzliche Eingangsgröße bereitgestellt wird.

2. Verfahren nach Anspruch 1, wobei die Trainings-Bildpaare (In1, Out1; In2, Out2; In3, Out3; ...) erzeugt werden, indem jeweils ein erstes Bild (In1, In2, In3, ...) mit Regen-, Lichteinfall und/oder Schmutzbeeinträchtigung und ein zweites Bild (Out1, Out2, Out3, ...) ohne Beeinträchtigung zeitgleich oder unmittelbar aufeinander folgend aufgenommen werden.

3. Verfahren nach einem der vorhergehenden Ansprüche, wobei die Trainings-Bildpaare (In1, Out1; In2, Out2; In3, Out3; ...) mindestens eine Folge von aufeinander folgenden Eingangs- und Ausgangsbildern in Form von Videosequenzen enthalten.

4. Verfahren nach einem der vorhergehenden Ansprüche, wobei das künstliche neuronale Netz (CNN1, CNN10, CNN11, CNN12) eine gemeinsame Eingangsschnittstelle für zwei separate Ausgangsschnittstellen (CNN11, CNN12) aufweist, wobei die gemeinsame Eingangsschnittstelle geteilte Merkmalsrepräsentationsschichten aufweist, wobei an der ersten Ausgangsschnittstelle (CNN11) korrigierte Bilddaten (Opti) ausgegeben werden, wobei an der zweiten Ausgangsschnittstelle (CNN12) ADAS-relevante Detektionen mindestens einer ADAS-Detektionsfunktion (fn1, fn2, fn3, fn4) ausgegeben werden und wobei im Rahmen des Trainings die Ausgaben beider Ausgangsschnittstellen (CNN11, CNN12) optimiert werden.

5. Verfahren zum Korrigieren von Eingangs-Bilddaten einer Kamera (K), die durch Regen, Lichteinfall und/oder Schmutz beeinträchtigt sind, mit den Schritten:
a) von der Kamera (K) erfasste Eingangs-Bilddaten (Ini), die durch Regen, Lichteinfall und/oder Schmutz beeinträchtigt sind und ein Faktor d als zusätzliche Eingangsgröße, werden einem trainierten künstlichen neuronalen Netzwerk (CNN1, CNN10, CNN11, CNN12) bereitgestellt,
b) das trainierte künstliche neuronale Netzwerk (CNN1, CNN10, CNN11, CNN12) ist dazu konfiguriert, die Eingangs-Bilddaten (Ini) mit Regen-, Lichteinfall und/oder Schmutzbeeinträchtigung in Ausgabe-Bilddaten (Opti) ohne Beeinträchtigung umzuwandeln und ein Sicherheitsmaß c zu ermitteln, das vom Grad der Benetzung durch Wasser, Lichteinfall und/oder Verschmutzung für ein Bild der Eingangs-Bilddaten abhängig ist und die Sicherheit des Netzwerks charakterisiert, dass die Bildkorrektur des Netzwerks zutreffend ist, zu ermitteln, wobei die Umwandlung in Abhängigkeit von dem Faktor d gesteuert wird, und
c) das trainierte künstliche neuronale Netzwerk (CNN1, CNN10, CNN11, CNN12) ist dazu konfiguriert, die Ausgabe-Bilddaten (Opti) und das ermittelte Sicherheitsmaß c auszugeben.

6. Verfahren nach Anspruch 5, wobei die Eingangsbilddaten mindestens eine Folge von aufeinander folgend erfassten Eingangsbildern als Eingangs-Bilddaten enthält.

7. Verfahren nach einem der Ansprüche 5 oder 6, wobei die Kamera (K) eine fahrzeuggebundene Umfelderfassungskamera ist.

8. Verfahren nach Anspruch 7, wobei eine Ausgabe der umgewandelten Bilddaten (Opti) und des ermittelten Sicherheitsmaßes c an mindestens eine ADAS-Detektionsfunktion erfolgt, welche auf der Grundlage der umgewandelten Bilddaten ADAS-relevante Detektionen ermittelt und ausgibt.

9. Vorrichtung mit mindestens einer Datenverarbeitungseinheit konfiguriert zum Korrigieren von Eingangs-Bilddaten (Ini) einer Kamera (K), die durch Regen, Lichteinfall und/oder Schmutz beeinträchtigt sind, in Ausgabe-Bilddaten (Opti) umfassend:
- eine Eingangsschnittstelle, die konfiguriert ist zum Empfangen der Eingangs-Bilddaten (Ini) mit Regen-, Lichteinfall und/oder Schmutzbeeinträchtigung von der Kamera (K),
- ein trainiertes künstliches neuronales Netzwerk (CNN1, CNN10, CNN11, CNN12), das dazu konfiguriert ist, die Eingangs-Bilddaten (Ini) in Abhängigkeit von einem Faktor d, welcher dem neuronalen Netz (CNN1, CNN10, CNN11, CNN12) als zusätzliche Eingangsgröße bereitgestellt wird, in Ausgabe-Bilddaten (Opti) ohne Beeinträchtigung umzuwandeln und ein Sicherheitsmaß c zu ermitteln, das vom Grad der Benetzung durch Wasser, Lichteinfall und/oder Verschmutzung für ein Bild der Eingangs-Bilddaten abhängig ist und die Sicherheit des Netzwerks charakterisiert, dass die Bildkorrektur des Netzwerks zutreffend ist, und
- eine erste Ausgangsschnittstelle (CNN11), die dazu konfiguriert ist, die umgewandelten Ausgabe-Bilddaten (Opti) und das ermittelte Sicherheitsmaß c auszugeben.

10. Vorrichtung nach Anspruch 9, wobei die Datenverarbeitungseinheit in eine hardwarebasierter Bildvorverarbeitungsstufe implementiert ist.

11. Vorrichtung nach Anspruch 9 oder 10, wobei die Kamera (K) eine fahrzeuggebundene Umfelderfassungskamera ist und das trainierte künstliche neuronale Netzwerk (CNN1, CNN10, CNN11) zur Bildkorrektur Bestandteil eines fahrzeugseitigen ADAS-Detektions-Neuronalen-Netzwerks (CNN2, CNN12) mit einer geteilten Eingangsschnittstelle, und zwei separaten Ausgangsschnittstellen ist, wobei die erste Ausgangsschnittstelle (CNN11) zur Ausgabe der korrigierten Ausgabebilddaten (Opti) und die zweite Ausgangsschnittstelle (CNN12) zur Ausgabe der ADAS-relevanten Detektionen konfiguriert sind.

12. Vorrichtung nach einem der Ansprüche 9 bis 11, wobei die Eingangsbilddaten mindestens eine Folge von aufeinander folgend erfassten Eingangsbildern als Eingangs-Bilddaten enthält und das künstliche neuronale Netzwerk anhand von mindestens einer Folge von aufeinander folgenden Eingangs- und Ausgangsbildern trainiert worden ist.

13. Computer Programmelement, welches, wenn damit eine Datenverarbeitungseinheit programmiert wird, die Datenverarbeitungseinheit dazu anweist, ein Verfahren nach einem der Ansprüche 5 bis 8 durchzuführen.

## Claims

1. A method for machine learning of image correction of input image data of a camera (K), which are impaired by rain, incident light, and/or soiling, into output image data by means of an artificial neural network (CNN1, CNN10, CNN11, CNN12), wherein the learning is carried out using a plurality of training image pairs (In1, Out1; In2, Out2; In3, Out3; ...) in such a way that in each case a first image (In1, In2, In3, ...) having rain, incident light, and/or soiling impairment is provided at the input of the artificial neural network (CNN1, CNN10) and a second image (Out1, Out2, Out3, ...) of the same scene without impairment is provided as the target output image,
**characterised in that** the artificial neural network (CNN1, CNN10, CNN11, CNN12) is designed in such a way that it determines a certainty measure c, which depends on the degree of wetting by water, incident light, and/or soiling for an input image, and characterises the certainty of the network that the image correction of the network is accurate, wherein
the artificial neural network (CNN1, CNN10, CNN11, CNN12) can, after completion of the machine learning, determine and output the certainty measure c for a new input image, and
wherein at least one factor d is determined as a measure of the difference between the target output image (Out1, Out2, Out3, ...) and the impaired input image (In1, In2, In3, ...) of a training image pair (In1, Out1; In2, Out2; In3, Out3; ...) and is provided to the artificial neural network as an additional input variable.

2. The method according to Claim 1, wherein the training image pairs (In1, Out1; In2, Out2; In3, Out3; ...) are generated by in each case recording a first image (In1, In2, In3, ...) with rain, incident light, and/or soiling impairment, and a second image (Out1, Out2, Out3, ...) without impairment, simultaneously or in immediate succession.

3. The method according to any one of the preceding claims, wherein the training image pairs (In1, Out1; In2, Out2; In3, Out3; ...) contain at least one sequence of successive input and output images in the form of video sequences.

4. The method according to any one of the preceding claims, wherein the artificial neural network (CNN1, CNN10, CNN11, CNN12) has a common input interface for two separate output interfaces (CNN11, CNN12), wherein the common input interface has shared feature representation layers, wherein corrected image data (Opti) are output at the first output interface (CNN11), wherein ADAS-relevant detections of at least one ADAS detection function (fn1, fn2, fn3, fn4) are output at the second output interface (CNN12), and wherein the outputs of both output interfaces (CNN11, CNN12) are optimized in the context of the training.

5. A method for correcting input image data of a camera (K) that are impaired by rain, incident light, and/or soiling, comprising the following steps:
a) input image data (Ini), which are captured by the camera (K) and are impaired by rain, incident light, and/or soiling, and a factor d as an additional input variable are provided to a trained artificial neural network (CNN1, CNN10, CNN11, CNN12),
b) the trained artificial neural network (CNN1, CNN10, CNN11, CNN12) is configured to convert the input image data (Ini) with rain, incident light, and/or soiling impairment into output image data (Opti) without impairment and to determine a certainty measure c, which depends on the degree of wetting by water, incident light, and/or soiling for an image of the input image data and characterizes the certainty of the network that the image correction of the network is accurate, wherein the conversion is controlled depending on the factor d, and
c) the trained artificial neural network (CNN1, CNN10, CNN11, CNN12) is configured to output the output image data (Opti) and the determined certainty measure c.

6. The method according to Claim 5, wherein the input image data contain at least one sequence of successively captured input images as input image data.

7. The method according to any one of Claims 5 and 6, wherein the camera (K) is a vehicle-related surroundings capture camera.

8. The method according to Claim 7, wherein the converted image data (Opti) and the determined certainty measure c are output to at least one ADAS detection function, which determines and outputs ADAS-relevant detections on the basis of the converted image data.

9. A device having at least one data processing unit configured to correct input image data (Ini) of a camera (K), which are impaired by rain, incident light, and/or soiling, into output image data (Opti), comprising:
- an input interface configured to receive the input image data (Ini) with rain, incident light, and/or soiling impairment from the camera (K),
- a trained artificial neural network (CNN1, CNN10, CNN11, CNN12) configured to convert the input image data (Ini) into output image data (Opti) without impairment depending on a factor d that is provided to the neural network (CNN1, CNN10, CNN11, CNN12) as an additional input variable, and to ascertain a certainty measure c which is dependent on the degree of wetting by water, incident light, and/or soiling for an image of the input image data and characterizes the certainty of the network in that the image correction of the network is accurate, and
- a first output interface (CNN11) configured to output the converted output image data (Opti) and the determined certainty measure c.

10. The device according to Claim 9, wherein the data processing unit is implemented in a hardware-based image pre-processing stage.

11. The device according to Claim 9 or 10, wherein the camera (K) is a vehicle-based surroundings capture camera, and the trained artificial neural network (CNN1, CNN10, CNN11) for image correction is part of a vehicle-side ADAS-detection neural network (CNN2, CNN12) having a shared input interface and two separate output interfaces, wherein the first output interface (CNN11) is configured to output the corrected output image data (Opti) and the second output interface (CNN12) is configured to output the ADAS-relevant detections.

12. The device according to any one of Claims 9 to 11, wherein the input image data contain at least one sequence of successively captured input images as input image data, and the artificial neural network has been trained on the basis of at least one sequence of successive input and output images.

13. A computer program element which, when it is used to program a data processing unit, instructs the data processing unit to carry out a method according to any one of Claims 5 to 8.

## Revendications

1. Procédé d'apprentissage automatique d'une correction d'image de données d'image d'entrée d'une caméra (K), qui sont affectées par la pluie, l'incidence lumineuse et/ou des salissures, en données d'image de sortie au moyen d'un réseau neuronal artificiel (CNN1, CNN10, CNN11, CNN12), dans lequel l'apprentissage est effectué au moyen d'une pluralité de paires d'images d'entraînement (In1, Out1 ; In2, Out2 ; In3, Out3 ; ...), de sorte que, respectivement, une première image (In1, In2, In3, ...) présentant une altération par la pluie, une incidence lumineuse et/ou des salissures est fournie à l'entrée du réseau neuronal artificiel (CNN1, CNN10), et une seconde image (Out1, Out2, Out3, ...) de la même scène sans altération est fournie comme image de sortie de consigne,
**caractérisé en ce que**
le réseau neuronal artificiel (CNN1, CNN10, CNN11, CNN12) est conçu de telle sorte qu'il détermine une mesure de sécurité c qui dépend du degré de mouillage par l'eau, d'incidence lumineuse et/ou d'encrassement pour une image d'entrée et qui caractérise la sécurité du réseau quant au fait que la correction d'image du réseau est correcte, dans lequel
le réseau neuronal artificiel (CNN1, CNN10, CNN11, CNN12) peut, après achèvement de l'apprentissage automatique, déterminer et délivrer la mesure de sécurité c pour une nouvelle image d'entrée, et
dans lequel au moins un facteur d est déterminé en tant que mesure de l'écart entre l'image de sortie de consigne (Out1, Out2, Out3, ...) et l'image d'entrée affectée (In1, In2, In3, ...) d'une paire d'images d'entraînement (In1, Out1 ; In2, Out2 ; In3, Out3 ; ...), et est fourni au réseau neuronal artificiel en tant que grandeur d'entrée supplémentaire.

2. Procédé selon la revendication 1, dans lequel les paires d'images d'entraînement (In1, Out1 ; In2, Out2 ; In3, Out3 ; ...) sont générées en ce qu'une première image (In1, In2, In3, ...) présentant une altération par la pluie, une incidence lumineuse et/ou des salissures et une seconde image (Out1, Out2, Out3, ...) sans altération, simultanément ou immédiatement successivement, sont respectivement acquises.

3. Procédé selon l'une quelconque des revendications précédentes, dans lequel les paires d'images d'entraînement (In1, Out1 ; In2, Out2 ; In3, Out3 ; ...)contiennent au moins une séquence d'images d'entrée et de sortie successives sous la forme de séquences vidéo.

4. Procédé selon l'une quelconque des revendications précédentes, dans lequel le réseau neuronal artificiel (CNN1, CNN10, CNN11, CNN12) présente une interface d'entrée commune pour deux interfaces de sortie séparées (CNN11, CNN12), dans lequel l'interface d'entrée commune présente des couches de représentation de caractéristiques partagées, dans lequel des données d'image corrigées (Opti) sont délivrées à la première interface de sortie (CNN11), dans lequel des détections pertinentes pour l'ADAS d'au moins une fonction de détection ADAS (fn1, fn2, fn3, fn4) sont délivrées à la seconde interface de sortie (CNN12) et dans lequel, dans le cadre de l'apprentissage, les sorties des deux interfaces de sortie (CNN11, CNN12) sont optimisées.

5. Procédé de correction de données d'image d'entrée d'une caméra (K), qui sont affectées par la pluie, l'incidence lumineuse et/ou des salissures, comprenant les étapes suivantes :
a) des données d'image d'entrée (Ini) acquises par la caméra (K), qui sont affectées par la pluie, l'incidence lumineuse et/ou des salissures, ainsi qu'un facteur d en tant que grandeur d'entrée supplémentaire, sont fournies à un réseau neuronal artificiel entraîné (CNN1, CNN10, CNN11, CNN12),
b) le réseau neuronal artificiel entraîné (CNN1, CNN10, CNN11, CNN12) est configuré pour transformer les données d'image d'entrée (Ini), affectées par la pluie, l'incidence lumineuse et/ou des salissures, en données d'image de sortie (Opti) sans altération et pour déterminer une mesure de sécurité c, qui dépend du degré de mouillage par l'eau, de l'incidence lumineuse et/ou de l'encrassement pour une image des données d'entrée et qui caractérise la sécurité du réseau quant au fait que la correction d'image du réseau est correcte, dans lequel la transformation est contrôlée en fonction du facteur d, et
c) le réseau neuronal artificiel entraîné (CNN1, CNN10, CNN11, CNN12) est configuré pour délivrer les données d'image de sortie (Opti) et la mesure de sécurité c déterminée.

6. Procédé selon la revendication 5, dans lequel les données d'image d'entrée contiennent au moins une séquence d'images d'entrée acquises successivement.

7. Procédé selon l'une quelconque des revendications 5 ou 6, dans lequel la caméra (K) est une caméra d'environnement embarquée sur véhicule.

8. Procédé selon la revendication 7, dans lequel une sortie des données d'image transformées (Opti) et de la mesure de sécurité c déterminée est effectuée vers au moins une fonction de détection ADAS, laquelle détermine et délivre des détections pertinentes pour l'ADAS sur la base des données d'image transformées.

9. Dispositif comportant au moins une unité de traitement de données configurée pour corriger des données d'image d'entrée (Ini) d'une caméra (K) qui sont affectées par la pluie, l'incidence lumineuse et/ou des salissures en données d'image de sortie (Opti), comprenant :
- une interface d'entrée, configurée pour recevoir les données d'image d'entrée (Ini) altérées par la pluie, l'incidence lumineuse et/ou des salissures provenant de la caméra (K),
- un réseau neuronal artificiel entraîné (CNN1, CNN10, CNN11, CNN12), configuré pour transformer les données d'image d'entrée (Ini) en données d'image de sortie (Opti) sans altération, en fonction d'un facteur d, lequel est fourni au réseau neuronal (CNN1, CNN10, CNN11, CNN12) en tant que grandeur d'entrée supplémentaire, et pour déterminer une mesure de sécurité c, qui dépend du degré de mouillage par l'eau, de l'incidence lumineuse et/ou de l'encrassement pour une image des données d'entrée et qui caractérise la sécurité du réseau quant au fait que la correction d'image du réseau est correcte, et
- une première interface de sortie (CNN11), configurée pour délivrer les données d'image de sortie transformées (Opti) et la mesure de sécurité c déterminée.

10. Dispositif selon la revendication 9, dans lequel l'unité de traitement de données est implémentée dans un étage de prétraitement d'image basé sur matériel.

11. Dispositif selon la revendication 9 ou 10, dans lequel la caméra (K) est une caméra d'environnement embarquée sur véhicule et le réseau neuronal artificiel entraîné (CNN1, CNN10, CNN11) pour la correction d'image fait partie d'un réseau neuronal de détection ADAS côté véhicule (CNN2, CNN12) doté d'une interface d'entrée partagée et de deux interfaces de sortie séparées, dans lequel la première interface de sortie (CNN11) est configurée pour délivrer les données d'image de sortie corrigées (Opti) et la seconde interface de sortie (CNN12) est configurée pour délivrer les détections pertinentes pour l'ADAS.

12. Dispositif selon l'une quelconque des revendications 9 à 11, dans lequel les données d'image d'entrée contiennent au moins une séquence d'images d'entrée acquises successivement en tant que données d'image d'entrée et le réseau neuronal artificiel a été entraîné sur au moins une séquence d'images d'entrée et de sortie successives.

13. Éléments de programme informatique, qui, lorsqu'ils sont utilisés pour programmer une unité de traitement de données, instruisent cette unité de traitement de données à exécuter un procédé selon l'une quelconque des revendications 5 à 8.
